# FASCICULE DE BREVET EUROPEEN

(11) **EP 0 838 372 B1**
(45) Date de publication et mention de la délivrance du brevet: **20.03.2002**
(21) Numéro de dépôt: 97402208.9
(22) Date de dépôt: 23.09.1997
(51) Int. Cl.: B60R 5/00

(54) **Dispositif d'aide au chargement d'un coffre de véhicule automobile**
Hilfsvorrichtung zum Beladen eines Kofferraums eines Kraftfahrzeuges
Device to help loading a luggage boot of a motor vehicle

(30) Priorité: 22.10.1996 FR 9612829
(43) Date de publication de la demande: 29.04.1998
(73) Titulaire: AUTOMOBILES PEUGEOT, 75116 Paris (FR); AUTOMOBILES CITROEN, 92200 Neuilly-sur-Seine (FR)
(72) Inventeur: Riga, Alessandro, 75015 Paris (FR)
(74) Mandataire: Berger, Helmut

(56) Documents cités:
- US-A- 2 551 074
- US-A- 2 859 887
- US-A- 3 807 592
- US-A- 3 870 178
- US-A- 3 900 118
- US-A- 3 961 715
- US-A- 4 212 581

## Description

La présente invention concerne un dispositif d'aide au chargement d'un coffre de véhicule automobile.

Les véhicules actuels équipés d'un coffre ont une garde au sol importante de sorte que lors du chargement du coffre en objets, tels que bagages, il est nécessaire de soulever ces objets assez haut et de les poser ensuite au fond du coffre, ce qui nécessite un effort important et fastidieux de la part de la personne chargeant le coffre.

US-A-3 961 715 décrit un dispositif d'aide au chargement d'un coffre de véhicule automobile comprenant les caractéristiques du préambule de la revendication 1.

Cependant, ce . dispositif connu se traduit par la présence du rouleau en saillie dans le coffre, ce qui est gênant et encombrant.

La présente invention a pour but d'éliminer les inconvénients ci-dessus en proposant un dispositif d'aide au chargement d'un coffre de véhicule automobile agencé de façon à limiter considérablement l'effort nécessaire à une personne pour charger ou décharger le coffre, tout en étant peu encombrant.

A cet effet, le dispositif selon l'invention comprend les caractéristiques énoncées dans la revendication 1.

Le rouleau est sensiblement horizontal et monté sur la paroi arrière du coffre sensiblement transversalement à l'axe du véhicule.

Le rouleau est supporté à chacune de ses extrémités sur un bras fixé à la paroi arrière du coffre de façon pivotante dans un plan vertical entre les deux positions active et inactive précitées.

Le dispositif comprend avantageusement des moyens de verrouillage du rouleau à sa position active d'utilisation.

Selon une variante de réalisation, ces moyens de verrouillage comprennent au moins un élément formant taquet monté sur la paroi arrière du coffre et pouvant coulisser ou basculer à une position transversale au bras pivotant correspondant de support du rouleau de manière à bloquer ce bras à une position verticale d'utilisation du rouleau.

Selon une autre variante de réalisation, les moyens de verrouillage comprennent au moins un élément formant pêne monté sur la paroi arrière du coffre et comportant une extrémité biseautée sur laquelle peut venir en appui le bras pivotant correspondant lors de la levée du rouleau à sa position active d'utilisation de manière à rétracter l'élément formant pêne contre la force de rappel d'un ressort transversalement au bras mobile qui est ensuite bloqué en position verticale d'utilisation du rouleau par retour de l'élément formant pêne en position transversale de blocage du bras mobile.

Selon un deuxième mode de réalisation, le rouleau est monté sur la paroi arrière du coffre par l'intermédiaire de deux pièces en forme de U renversé disposées de part et d'autre du rouleau dont l'axe est fixé à chaque extrémité à la partie de liaison des deux branches de la pièce en forme de U renversé correspondante, lesquelles branches peuvent coulisser respectivement dans deux rainures parallèles horizontales formant rails de guidage de manière qu'en exerçant une traction vers le haut sur le rouleau à partir de sa position escamotée, les pièces en forme de U renversé passent, par coulissement dans les rainures, d'une position horizontale couchée à une position verticale sensiblement perpendiculaire au rouleau et à laquelle les deux pièces en forme de U renversé, dégagées de leurs rainures, viennent en appui, par les extrémités libres de leurs branches, sur des parties épaulées horizontales parallèles à l'axe du véhicule pour maintenir le rouleau en position active d'utilisation.

Selon un troisième mode de réalisation, le rouleau est fixé aux deux extrémités de son axe respectivement à deux pattes verticales pouvant coulisser verticalement entre la position escamotée du rouleau et sa position haute d'utilisation à laquelle il est maintenu par deux boutons pression s'engageant chacun élastiquement et transversalement à l'axe du véhicule dans un perçage de la patte de support correspondante et pouvant être chacun enfoncé manuellement dans la paroi arrière du coffre pour permettre la descente du rouleau à sa position escamotée.

Chaque élément roulant est situé à l'intérieur du coffre du véhicule.

Le rouleau est logé en position escamotée dans une forme réalisée dans la paroi arrière du coffre, de préférence dans une pièce de revêtement intérieure recouvrant cette paroi.

Avantageusement, chaque élément roulant est recouvert d'un matériau antidérapant.

L'invention propose également un dispositif d'aide au chargement d'un coffre de véhicule automobile, comprenant au moins un élément roulant constitué par un rouleau disposé au voisinage du bord supérieur de la paroi délimitant l'arrière du coffre et permettant de faire glisser sur celui-ci des objets dans le coffre et qui est caractérisé en ce que le rouleau présente la forme d'un cylindre à extrémité conique, d'un tonneau ou d'un diabolo et est fixé en permanence dans un logement réalisé dans une pièce de revêtement intérieure du coffre recouvrant la paroi arrière de celui-ci, ce logement étant en forme de demi-cylindre creux dont les parois verticales extrêmes semi-circulaires sont traversées par l'axe du rouleau pour supporter horizontalement celui-ci.

Avantageusement, le logement demi-cylindrique creux précité a l'une de ses parois sensiblement horizontale et arrondie à son bord pour permettre l'évacuation d'eau.

Le dispositif comprend plusieurs rouleaux fixés en série les uns aux autres par des pièces intermédiaires chacune en forme de disque comportant de part et d'autre du disque deux ergots coaxiaux servant d'axes de support de deux rouleaux adjacents et des bras solidaires respectivement des pièces intermédiaires permettant de fixer celles-ci à la paroi arrière du coffre.

Le dispositif peut comprendre deux rouleaux montés de part et d'autre du pêne ou de la gâche de verrouillage de l'ouvrant arrière du coffre.

L'invention sera mieux comprise et d'autres buts, caractéristiques, détails et avantages de celle-ci apparaîtront plus clairement au cours de la description explicative qui va suivre faite en référence aux dessins schématiques annexés donnés uniquement à titre d'exemple.

La figure 1 est une vue en perspective partielle de la partie arrière d'un coffre de véhicule automobile comprenant un dispositif, en position inactive escamotée, permettant de faciliter le chargement du coffre suivant un premier mode de réalisation de l'invention.

La figure 2 est une vue en perspective semblable à celle de la figure 1 et représentant le dispositif de l'invention en position active d'utilisation.

La figure 3 est une vue en coupe suivant la ligne III-III de la figure 2.

La figure 4 est une vue éclatée représentant la fixation d'une extrémité d'un rouleau du dispositif des figures 1 à 3 à la paroi arrière du coffre du véhicule.

La figure 5 représente en perspective un mode de réalisation d'un moyen de blocage d'une extrémité du rouleau de chargement des figures 1 à 4 en position d'utilisation.

La figure 6 représente en perspective un autre mode de réalisation d'un tel moyen de blocage.

La figure 7 représente un troisième mode de réalisation d'un autre moyen de blocage du rouleau de chargement en position d'utilisation.

La figure 8 représente en perspective l'application du dispositif des figures 1 à 4 pour le déchargement d'une roue de secours du véhicule.

La figure 9 représente un second mode de réalisation du dispositif de l'invention dont le rouleau de chargement est en position escamotée.

La figure 10 représente le rouleau de chargement du dispositif de la figure 9 en une position intermédiaire à celles escamotée et d'utilisation de ce rouleau.

La figure 11 est une vue en perspective d'une extrémité du rouleau de chargement du dispositif des figures 9 et 10 en position d'utilisation.

La figure 12 est une vue en perspective représentant un troisième mode de réalisation du dispositif de l'invention à rouleau pour faciliter le chargement du coffre du véhicule.

La figure 13 est une vue en coupe partielle suivant la ligne XIII-XIII de la figure 12.

La figure 14 est une vue en perspective où le rouleau de chargement est intégré à la paroi arrière du coffre du véhicule.

La figure 15 est une vue en coupe suivant la ligne XV-XV de la figure 14.

La figure 16 est une vue en perspective de l'arrière d'un véhicule dont le coffre comprend un dispositif de déchargement à deux rouleaux séparés et une roulette centrale entre eux.

La figure 17 est une vue en perspective de l'arrière d'un véhicule dont le coffre comprend trois rouleaux montés en série.

La figure 18 est une vue éclatée représentant la façon dont sont assemblés deux rouleaux en série adjacents de la figure 17.

Les figures 14 à 18 son des exemples utiles à la compréhension d'invention ou le rouleau n'a pas une forme selon l'invention.

La figure 19 représente une variante de réalisation de la forme d'un rouleau à extrémité en entonnoir.

La figure 20 représente le montage du rouleau de la figure 19 à la paroi arrière du coffre du véhicule.

Les figures 21 à 23 représentent d'autres formes de réalisation d'un rouleau pouvant être utilisé dans le dispositif de chargement de l'invention.

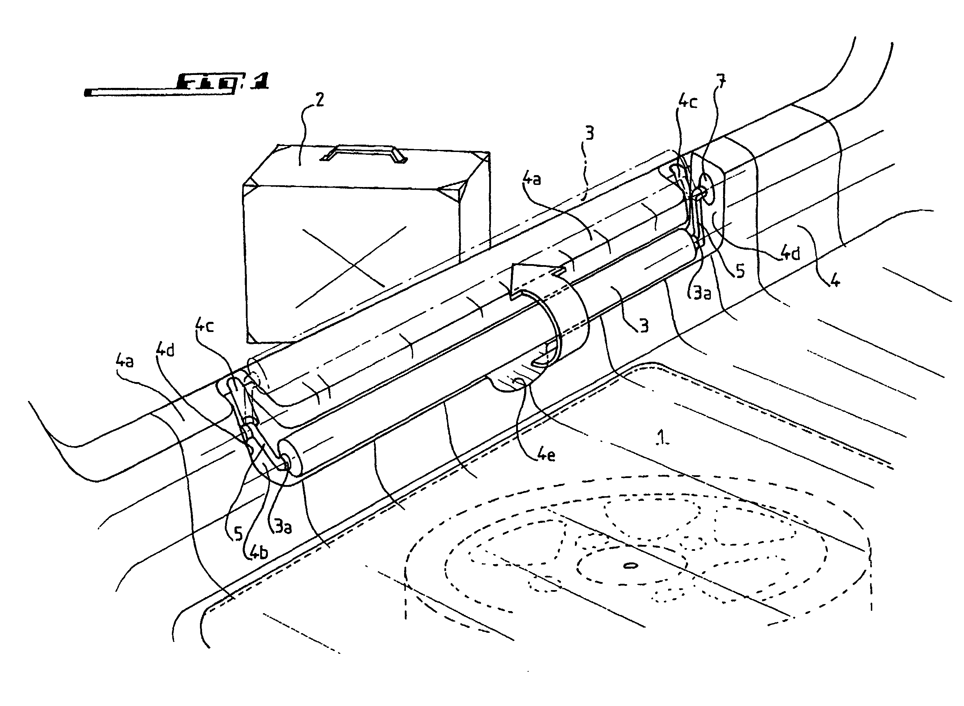

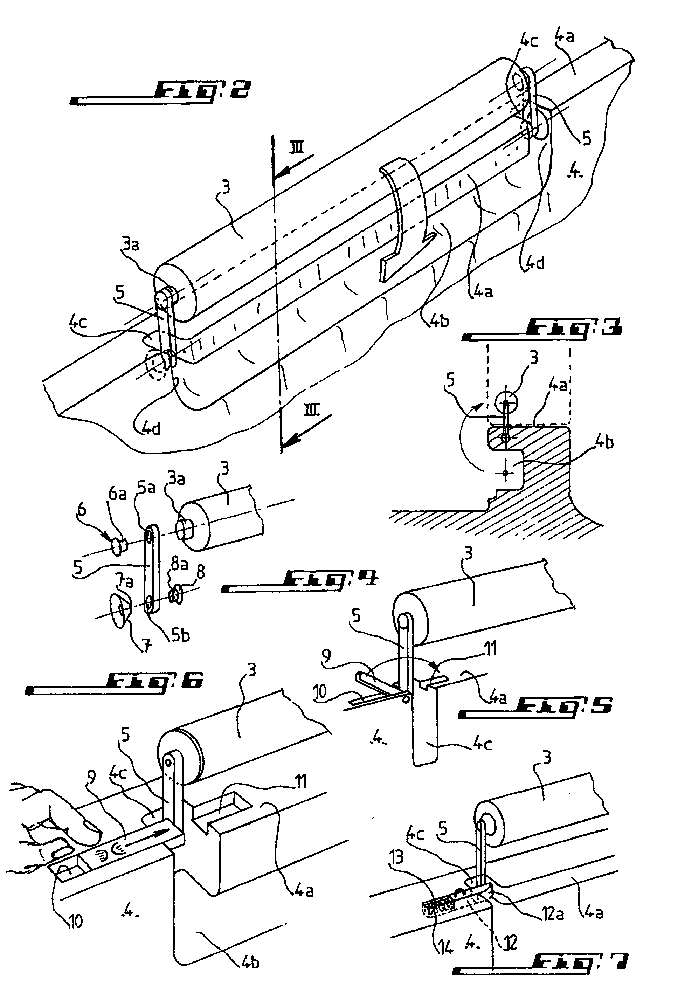

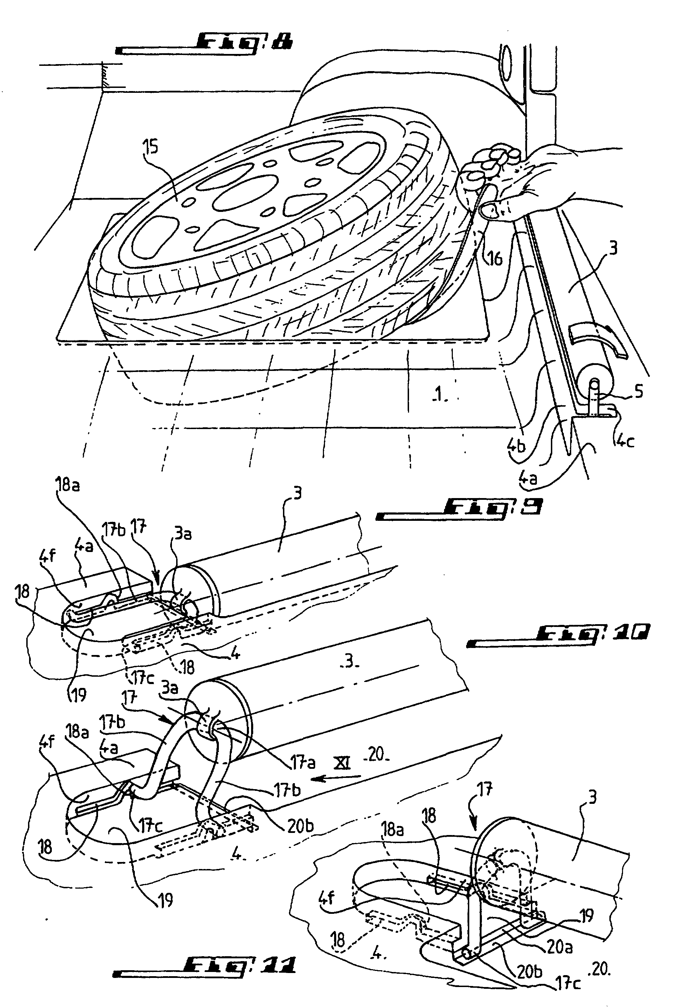

Les figures 1 à 4 représentent le premier mode de réalisation du dispositif de l'invention permettant d'assister une personne au chargement d'un coffre 1 d'un véhicule automobile par des objets 2, tels que des bagages, ou au déchargement de ceux-ci du coffre 1.

Ce dispositif comprend un élément roulant 3 constitué par un rouleau horizontal sensiblement transversal à l'axe longitudinal du véhicule et assemblé à une paroi verticale 4 délimitant la partie arrière du coffre 1 de manière à occuper une position inactive escamotée dans la paroi 4 ou une position active d'utilisation à laquelle le rouleau 3 est disposé au voisinage du bord supérieur 4a de la paroi 4, au moins légèrement au-dessus de celui-ci pour permettre le glissement, par rotation du rouleau 3 autour de son axe longitudinal, des bagages 2 dans le coffre 1 lors du chargement de celui-ci.

Pour permettre le déplacement du rouleau 3 de sa position escamotée à sa position d'utilisation ou vice-versa, celui-ci est supporté à chacune des extrémités 3a de son axe par un bras 5 dont l'extrémité opposée à celle portant l'axe du rouleau 3 est montée à rotation dans la paroi 4 autour d'un axe transversal à l'axe du véhicule de manière que les deux bras 5 pivotent ensemble dans un plan vertical parallèle à l'axe du véhicule.

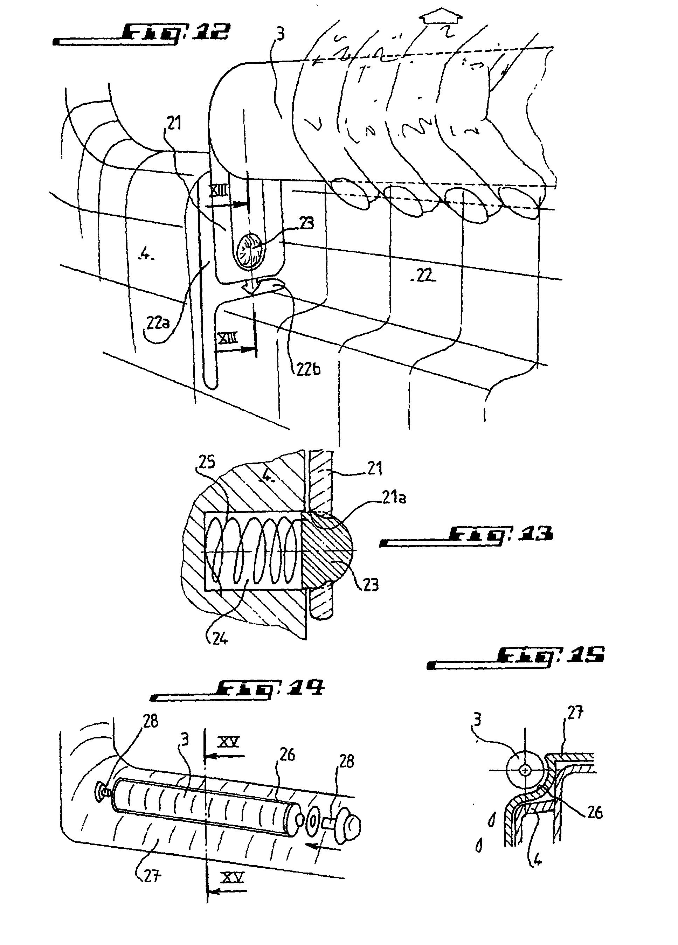

En position inactive, le rouleau 3 est escamoté dans une partie évidée transversale 4b de réception du rouleau 3 réalisée dans la paroi 4 en dessous du bord supérieur 4a de celle-ci. Pour permettre le pivotement des bras 5 de leur position rabattue correspondant à la position escamotée du rouleau 3 à leur position sensiblement verticale correspondant à la position d'utilisation de ce rouleau, la paroi 4 comporte deux entailles 4c parallèles à l'axe du véhicule, débouchant sur le bord 4a de la paroi 4 et délimitées chacune par une paroi 4d délimitant également la partie évidée 4b et sur laquelle est montée à rotation l'extrémité correspondante du bras mobile 5. La figure 4 montre un exemple de montage du rouleau 3 à la paroi arrière 4 par l'intermédiaire de chaque bras 5. Ainsi, chaque extrémité filetée 3a de l'axe du rouleau 3, traverse un perçage 5a de l'extrémité correspondante du bras pivotant 5 et est maintenue dans celle-ci par un écrou capuchon 6 dont la partie cylindrique 6a, dans laquelle est réalisé le taraudage de réception de l'extrémité filetée, s'engage pratiquement sans jeu dans ce perçage. L'autre extrémité du bras 5 est fixée à la paroi correspondante 4d par l'intermédiaire d'une pièce 7 solidaire de cette paroi et comportant une extrémité filetée 7a passant à travers le perçage 5b de l'extrémité du bras 5 et d'un écrou-capuchon 8 dont la partie cylindrique 8a, dans laquelle est réalisé le taraudage de réception de l'extrémité 7a, s'engage pratiquement sans jeu dans le perçage 5b.

Comme cela ressort de la figure 1, la paroi 4 comporte une entaille 4e permettant le passage d'au moins un doigt d'une personne pour soulever le rouleau 3 de sa position escamotée représentée à cette figure à sa position relevée d'utilisation représentée en figure 2.

Lorsque le rouleau 3 est en position d'utilisation, le seul effort que la personne exerce sur chaque bagage lors du chargement du coffre 1 est celui nécessaire pour déposer le bagage sur le rouleau 3 pour qu'à ce moment là la personne n'ait plus qu'à pousser les bagages sur le rouleau 3 pour les faire tomber dans le coffre 1.

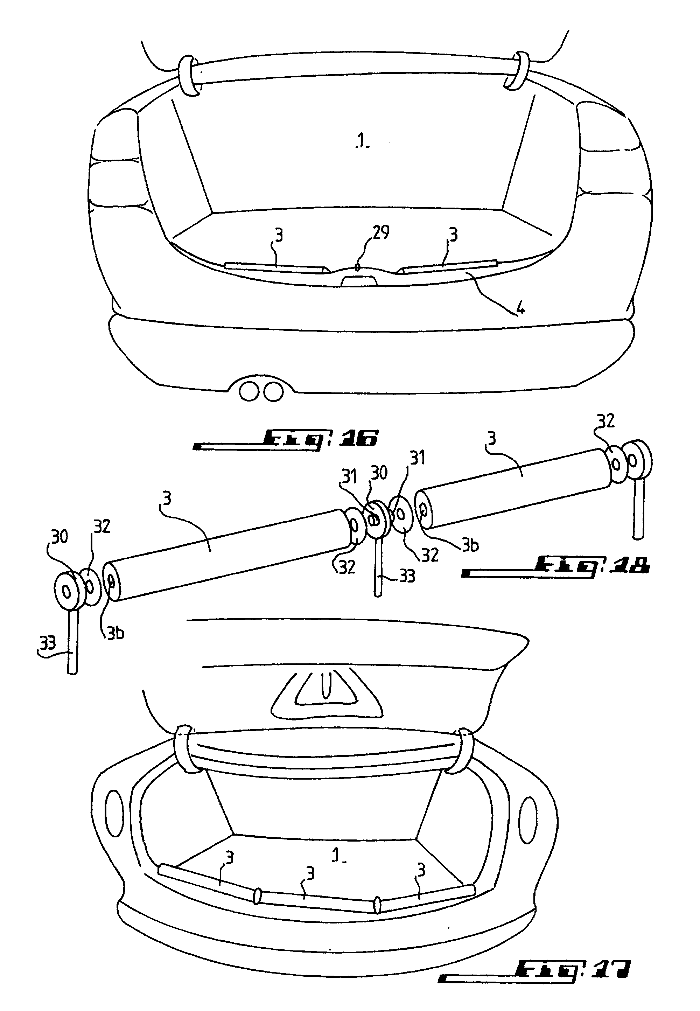

La figure 5 représente un mode de réalisation d'un moyen permettant de verrouiller le rouleau 3 à sa position active d'utilisation. Ce moyen de verrouillage est constitué par un élément formant taquet 9 monté basculant dans un plan sensiblement perpendiculaire à l'axe du véhicule entre une position escamotée dans une rainure de forme conjuguée 10 réalisée dans le bord extérieur 4a de la paroi 4 et une position de blocage du bras mobile 5 à sa position sensiblement verticale. En position de blocage du bras 5, l'élément formant taquet 9 occupe une position horizontale transversale au bras 5 en étant en appui au voisinage de l'extrémité inférieure du bras 5 de manière à l'empêcher de pivoter dans le sens de basculement du rouleau 3 vers sa position escamotée. Une rainure 11 est réalisée dans le bord supérieur 4a de la paroi 4 en prolongement de la rainure 10 de l'autre côté de la saillie 4c de manière à recevoir l'extrémité correspondante de l'élément formant taquet 9 en position rabattue de verrouillage du bras 5. Bien entendu, un autre moyen de verrouillage tel que représenté en figure 5 peut être utilisé pour bloquer l'autre bras 5 en position verticale.

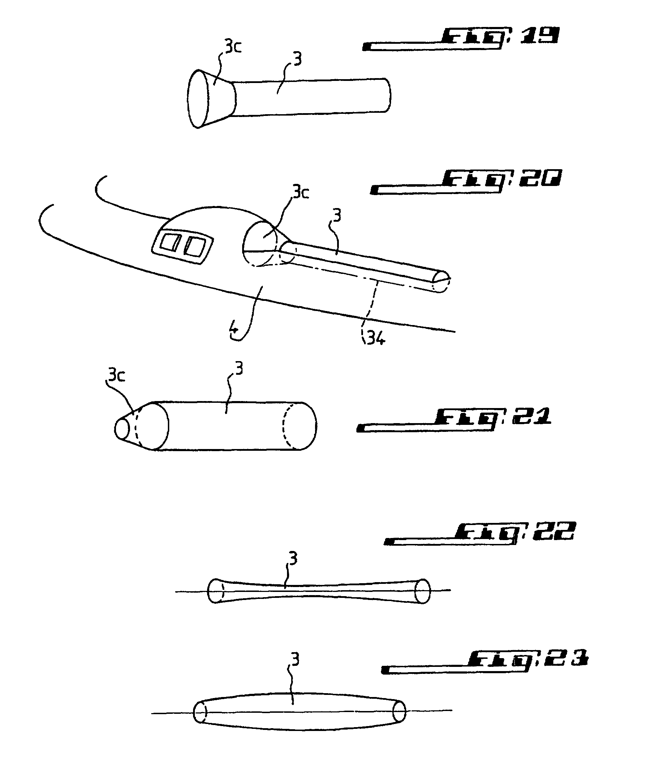

La figure 6 représente une variante de réalisation du moyen de verrouillage de la figure 5 et selon laquelle l'élément formant taquet 9 est monté coulissant dans la rainure 10 transversalement à l'axe du véhicule entre une position escamotée dans la rainure 10 et une position de blocage du bras correspondant 5 à laquelle une partie d'extrémité de l'élément formant taquet 9 repose dans l'autre rainure opposée 11.

La figure 7 représente un autre mode de réalisation d'un moyen de verrouillage du bras correspondant 5 à sa position verticale d'utilisation du rouleau 3.

Ce moyen de verrouillage comprend un élément formant pène 12 pouvant coulisser transversalement à l'axe du véhicule d'une position sortie traversant l'entaille correspondante 4c de passage du bras mobile 5 à une position rétractée dans un logement de forme conjuguée 13 de la paroi 4 contre la force de rappel d'un ressort 14 logé dans cet évidement. L'élément formant pène 12 a son extrémité 12a biseautée de manière que lors du pivotement du bras 5 vers sa position verticale, celui-ci vient en appui sur la partie biseautée 12a pour rétracter l'élément formant pêne 12 dans son logement 13 ou écarter cet élément de son passage. Lorsque le bras 5 occupe sa position verticale d'utilisation du rouleau 3, l'élément formant pêne 12 revient en position sortie de son logement 13 par l'action du ressort 14 pour bloquer le bras 5 à cette position. Pour permettre le retour du rouleau 3 à sa position escamotée, la personne déplace manuellement l'élément formant pêne 12 à sa position rétractée pour libérer l'entaille de passage 4c du bras 5.

La figure 8 montre l'application du dispositif à rouleau 3 des figures 1 à 4 pour décharger une roue de secours 15 du coffre 1 en utilisant une lanière 16 située sous la roue et pouvant être saisie manuellement pour la soulever et la poser sur le rouleau 3 et l'extraire ainsi facilement du coffre 1.

Les figures 9 à 11 représentent un second mode de réalisation du dispositif de l'invention permettant au rouleau 3 de passer de sa position escamotée à sa position d'utilisation ou vice-versa par simple traction.

Pour cela, le rouleau 3 est assemblé à la paroi arrière 4 du coffre 1 par l'intermédiaire de deux pièces en forme de U renversé 17, dont une seule est représentée, disposées de part et d'autre du rouleau 3 dont l'axe 3a est fixé à chacune de ses extrémités à la partie de liaison 17a des deux branches 17b de la pièce en forme de U renversé correspondante 17. Les deux branches 17b de chaque pièce en forme de U renversé 17 ont leurs extrémités comportant deux ergots coaxiaux 17c faisant saillie à l'extérieur de ces branches de manière à s'engager respectivement dans deux rainures parallèles horizontales 18 formant rails de guidage, disposées transversalement à l'axe du véhicule et chacune réalisée dans une paroi verticale 4f du bord supérieur 4a de la paroi 4, les deux parois verticales 4f délimitant une partie évidée horizontale par exemple sensiblement en forme de U couché 19 permettant de recevoir la pièce en forme de U correspondante 17 en position inactive escamotée du rouleau 3 dans un logement correspondant 20. Chaque partie évidée 19 débouche vers le logement 20 dont une paroi verticale 20a située en aplomb du bord d'extrémité du logement 19 comporte une partie horizontale 20b, disposée parallèlement à l'axe du véhicule et sur laquelle vient en appui les deux extrémités des branches 17b de la pièce en forme de U renversé correspondante 17 lorsque le rouleau 3 est en position d'utilisation.

Ainsi, en position escamotée du rouleau 3, les deux parties en forme de U renversé 17 sont couchées horizontalement dans leurs parties évidées respectives 19 et lorsque le rouleau 3 doit être amené à sa position d'utilisation, la personne tire celui-ci vers le haut de manière à faire coulisser simultanément les extrémités des branches 17b des parties en forme de U renversé 17 dans les rainures correspondantes 18 jusqu'à ce que les deux pièces 17 quittent leurs parties évidées 19 pour se trouver en une position verticale sensiblement perpendiculaire à l'axe du rouleau 3 et à laquelle les extrémités libres des branches 17b de ces pièces 17 viennent en appui sur leurs parties horizontales respectives 20b pour être maintenues verticalement et supporter le rouleau 3a en position d'utilisation.

Lorsque la personne souhaite ramener le rouleau 3a en position escamotée dans son logement 20, elle tire vers le haut le rouleau 3 pour engager à nouveau les ergots 17c des branches 17b des pièces 17 dans leurs rainures respectives 18 puis, en poussant le rouleau 13 dans son logement 20, les pièces en forme de U renversé 17 sont rabattues par leurs articulations aux extrémités 3a de l'axe du rouleau 3 dans leurs parties évidées respectives 19 par coulissement des ergots 17c dans les rainures 18.

Les figures 9 à 11 montrent également que chaque rainure 18 comporte au voisinage de son milieu un décrochement 18a qui permet un positionnement intermédiaire de la pièce en forme de U correspondante 17. Le décrochement 18a n'est pas symétrique et sa partie avant est verticale pour permettre le blocage de la pièce en forme de U 17.

Les figures 12 et 13 représentent un troisième mode de réalisation de l'invention d'un dispositif à rouleau permettant de faciliter le chargement du coffre 1 du véhicule automobile.

Selon ce dispositif, le rouleau 3 est fixé aux deux extrémités de son axe respectivement par deux pattes verticales 21, dont une seule est représentée, pouvant coulisser verticalement par rapport à la paroi arrière 4 entre une position escamotée dans le logement correspondant 22 transversal à l'axe du véhicule défini dans la paroi 4 notamment par deux parois verticales extrêmes 22a parallèles à l'axe du véhicule et le long desquelles coulissent respectivement les deux pattes de support 21 du rouleau 3. Pour permettre au rouleau 3 d'être totalement escamoté ou pratiquement en affleurement avec le bord supérieur de la paroi 4 en position escamotée de celui-ci, les deux pattes 21 peuvent s'engager respectivement dans deux rainures verticales 22b réalisées au fond du logement de ce rouleau. Ce dernier est maintenu en position haute d'utilisation représentée à la figure 12 par deux boutons-pression 23 s'engageant chacun élastiquement et transversalement à l'axe du véhicule dans un perçage 21a de la patte correspondante. Chaque bouton-pression 23 est ainsi logé, en position escamotée du rouleau 3 dans la paroi 4, dans un trou borgne 24 de la paroi 4 avec interposition d'un ressort 25 entre le bouton-pression 23 et le fond du trou borgne 24 et tendant à repousser le bouton-pression 23 vers l'extérieur. Chaque bouton-pression 23 est maintenu dans le trou borgne 24 par la patte correspondante 21 tant que le rouleau 3 ne se trouve pas à sa position haute d'utilisation. En tirant le rouleau 3 de sa position escamotée à sa position d'utilisation, le perçage 21a de chaque patte de support 21 vient en face du bouton-pression correspondant 23 qui s'engage alors élastiquement dans ce perçage pour bloquer chaque patte à la position d'utilisation du rouleau. Pour ramener ce dernier en position escamotée, la personne enfonce avec un doigt chaque bouton-pression 23 dans son trou borgne 24 pour déverrouiller la patte correspondante et enfoncer le rouleau 3 dans son logement 22.

Les figures 14 et 15 représentent un quatrième mode de réalisation du dispositif de l'invention selon lequel le rouleau 3 est fixé à demeure ou intégré dans un logement demi-cylindrique creux 26 transversal à l'axe du véhicule et réalisé dans une pièce de revêtement intérieur en matière plastique 27 recouvrant la paroi arrière du coffre 1. Le rouleau 3, qui est dans le cas présent situé à l'intérieur du coffre 1 du véhicule, est fixé dans le logement demi-cylindrique 26 par des vis de fixation 28 solidarisant les extrémités de l'axe du rouleau 3 respectivement aux deux parois verticales d'extrémités semi-circulaires de ce logement. La figure 15 montre que le logement demi-cylindrique 26 a sa paroi inférieure sensiblement horizontale qui est arrondie à son bord pour permettre l'évacuation d'eau.

Bien entendu, le rouleau 3 décrit dans les autres modes de réalisation précédent peut être lui aussi logé de façon escamotée dans une pièce de revêtement intérieur recouvrant la paroi arrière 4 du coffre 1.

La figure 16 représente une variante de réalisation selon laquelle deux rouleaux 3 sont montés de part et d'autre du pêne ou de la gâche de verrouillage de l'ouvrant du coffre 1 à la paroi arrière 4 de celui-ci. Chaque rouleau 3 peut être monté à la paroi 4 selon l'un quelconque des modes de réalisation précédemment décrits et, de plus, une roulette centrale 29 peut être fixée à la paroi 4 entre les deux rouleaux 3 en étant montée verticalement dans un plan parallèle à l'axe du véhicule. Ce mode de réalisation est utile lorsque l'intérieur du coffre 1, plus précisément la paroi arrière 4 délimitant celui-ci, n'est pas rectiligne et la présence de la roue centrale 29 entre les deux rouleaux 3 facilite le chargement ou le déchargement d'objets lourds et encombrants.

Les figures 17 et 18 montrent une variante de réalisation selon laquelle plusieurs rouleaux 3 sont fixés ensemble en série à la paroi arrière 4 du coffre 1. Comme représenté, deux rouleaux adjacents 3 sont assemblés ensemble par une pièce intermédiaire en forme de disque 30 comportant de part et d'autre de chaque disque deux ergots coaxiaux 31 servant d'axes de support des deux rouleaux, 3 en s'engageant dans deux perçages 3b respectivement des deux rouleaux adjacents 3 réalisés coaxialement à l'axe longitudinal de chaque rouleau. Deux joints en caoutchouc 32 peuvent être montés respectivement sur les deux ergots 31 d'un disque 30 entre celui-ci et la face d'extrémité correspondante du rouleau 3. Des bras 33 solidaires respectivement des disques de support 30 des rouleaux 3 permettent de fixer ceux-ci à la paroi arrière 4 du coffre 1. Ce mode de réalisation convient pour des véhicules ayant un style particulier.

Les figures 19 à 23 montrent diverses formes de réalisation possibles d'un rouleau 3 pouvant être utilisé dans les modes de réalisation précédents.

Le rouleau 3 de la figure 19 a l'une 3c de ses extrémités tronconique ou en forme d'entonnoir et peut être monté à demeure dans un logement correspondant 34 réalisé dans le bord supérieur de la paroi arrière 4 dudit coffre comme représenté en figure 20. Selon la variante de réalisation de la figure 21, le rouleau 3 a l'une 3c de ses extrémités conique. Selon la figure 22, le rouleau 3 présente la forme d'un diabolo tandis qu'en figure 23, il présente une forme en tonneau ou en barillet. D'autres formes de rouleaux 3 sont envisageables sans sortir du cadre de la présente invention.

Diverses modifications peuvent être apportées aux dispositifs ci-dessus décrits de l'invention. Ainsi, les rouleaux 3 peuvent être recouverts d'un matériau antidérapant.

## Revendications

1. Dispositif d'aide au chargement d'un coffre (1) de véhicule automobile, comprenant au moins un élément roulant (3 ; 35) constitué par un rouleau disposé au voisinage du bord supérieur (4a) de la paroi (4) délimitant l'arrière du coffre (1) et permettant de faire glisser sur celui-ci des objets (2) dans le coffre (1), **caractérisé en ce que** l'élément roulant (3) est monté de manière à pouvoir occuper une position inactive escamotée dans la paroi (4) ou une position active d'utilisation.

2. Dispositif selon la revendication 1, **caractérisé en ce que** le rouleau (3) est sensiblement horizontal et monté sur la paroi arrière (4) du coffre (1) sensiblement transversalement à l'axe du véhicule.

3. Dispositif selon la revendication 1 ou 2, **caractérisé en ce que** le rouleau (3) est supporté à chacune de ses extrémités par un bras (5) fixé à la paroi arrière (4) du coffre (1) de façon pivotante dans un plan vertical entre les deux positions active et inactive précitées.

4. Dispositif selon l'une des revendications 1 à 3, **caractérisé en ce qu'**il comprend des moyens de verrouillage du rouleau (3) à sa position active d'utilisation.

5. Dispositif selon la revendication 4, **caractérisé en ce que** les moyens de verrouillage comprennent au moins un élément formant taquet (9) monté sur la paroi arrière (4) du coffre (1) et pouvant basculer ou coulisser à une position transversale au bras pivotant correspondant (5) de support du rouleau (3) de manière à bloquer ce bras (5) à une position verticale d'utilisation du rouleau (3).

6. Dispositif selon la revendication 4, **caractérisé en ce que** les moyens de verrouillage comprennent au moins un élément formant pêne (12) monté sur la paroi arrière (4) du coffre (1) et comportant une extrémité biseautée (12a) sur laquelle peut venir en appui le bras pivotant correspondant (5) lors de la levée du rouleau (3) à sa position active d'utilisation de manière à rétracter l'élément formant pêne (12) contre la force de rappel d'un ressort (14) transversalement au bras mobile (5) qui est ensuite bloqué en position verticale d'utilisation du rouleau (3) par retour de l'élément formant pêne (12) en position transversale de blocage de ce bras.

7. Dispositif selon la revendication 1, **caractérisé en ce que** le rouleau (3) est monté sur la paroi arrière (4) du coffre (1) par l'intermédiaire de deux pièces en forme de U renversé (17) disposées de part et d'autre du rouleau (3) dont l'axe est fixé à chaque extrémité à la partie de liaison (17a) des deux branches (17b) de la pièce en forme de U correspondante (17), lesquelles branches peuvent coulisser respectivement dans deux rainures parallèles horizontales (18) formant rails de guidage de manière qu'en exerçant une traction vers le haut sur le rouleau (3) à partir de sa position escamotée, les pièces en forme de U renversé (17) passent par coulissement dans les rainures (18) d'une position horizontale couchée à une position verticale sensiblement perpendiculaire au rouleau (3) et à laquelle les deux pièces en forme de U renversé (17), dégagées de leurs rainures (18), viennent en appui, par les extrémités libres de leurs branches (17b), sur des parties épaulées horizontales (20b) parallèles à l'axe du véhicule pour maintenir le rouleau en position active d'utilisation.

8. Dispositif selon la revendication 1 ou 2, **caractérisé en ce que** le rouleau (3) est fixé aux deux extrémités de son axe respectivement à deux pattes verticales (21) pouvant coulisser verticalement entre la position escamotée du rouleau (3) et sa position haute d'utilisation à laquelle il est maintenu par deux boutons-pression (23) s'engageant chacun élastiquement et transversalement à l'axe du véhicule dans un perçage (21a) de la patte de support correspondante (21) et pouvant être enfoncés manuellement dans la paroi arrière du coffre pour permettre la descente du rouleau (3) à sa position escamotée.

9. Dispositif selon l'une des revendications précédentes, **caractérisé en ce que** l'élément roulant (3) est situé à l'intérieur du coffre (1) du véhicule.

10. Dispositif selon l'une des revendications 1 à 9, **caractérisé en ce que** le rouleau (3) est logé en position escamotée dans une forme réalisée dans la paroi arrière (4) du coffre (1), de préférence dans une pièce de revêtement intérieur recouvrant cette paroi.

11. Dispositif selon l'une des revendications précédentes, **caractérisé en ce que** l'élément roulant (3) est recouvert d'un matériau antidérapant.

12. Dispositif d'aide au chargement d'un coffre (1) de véhicule automobile, comprenant au moins un élément roulant (3) constitué par un rouleau disposé au voisinage du bord supérieur (4a) de la paroi (4) délimitant l'arrière du coffre (1) et permettant de faire glisser sur celui-ci des objets (2) dans le coffre (1), **caractérisé en ce que** le rouleau présente la forme d'un cylindre à extrémité conique, d'un tonneau ou d'un diabolo et est fixé en permanence dans un logement (26) réalisé dans une pièce de revêtement intérieur du coffre (1) recouvrant la paroi arrière (4) de celui-ci, le logement étant en forme de demi-cylindre creux dont les parois verticales extrêmes semi-circulaires sont traversées par l'axe du rouleau (3) pour supporter horizontalement celui-ci.

13. Dispositif selon la revendication 12, **caractérisé en ce que** le logement demi-cylindrique creux précité a l'une de ses parois sensiblement horizontale arrondie à son bord pour permettre l'évacuation d'eau.

14. Dispositif selon la revendication 12 ou 13, **caractérisé en ce qu'**il comprend plusieurs rouleaux (3) fixés en série les uns aux autres par des pièces intermédiaires (30) chacune en forme de disque comportant de part et d'autre du disque deux ergots coaxiaux (31) servant d'axes de support de deux rouleaux adjacents (3) et des bras (33) solidaires respectivement des pièces intermédiaires permettant de fixer celles-ci à la paroi arrière (4) du coffre (1).

15. Dispositif selon l'une des revendications 1 à 14, **caractérisé en ce qu'**il comprend deux rouleaux (3) montés de part et d'autre du pêne ou de la gâche de verrouillage de l'ouvrant arrière du coffre (1).

## Patentansprüche

1. Hilfsvorrichtung zum Beladen eines Kofferraums (1) eines Kraftfahrzeugs, umfassend wenigstens ein rollendes Element (3; 35), das durch eine Walze gebildet wird, die in der Nähe des oberen Randes (4a) der Wand (4) angeordnet ist, die den hinteren Teil des Kofferraums (1) begrenzt und es ermöglicht, auf diesem Gegenstände (2) im Kofferraum (1) gleiten zu lassen, **dadurch gekennzeichnet, dass** das rollende Element (3) derart angebracht ist, dass es eine inaktive eingezogene Position in der Wand (4) oder eine aktive Arbeitsposition einnehmen kann.

2. Vorrichtung gemäß Anspruch 1, **dadurch gekennzeichnet, dass** die Walze (3) deutlich horizontal und auf der hinteren Wand (4) des Kofferraums (1) deutlich quer zur Achse des Fahrzeugs aufgebaut ist.

3. Vorrichtung gemäß Anspruch 1 oder 2, **dadurch gekennzeichnet, dass** die Walze (3) an jedem ihrer Enden durch einen Arm (5) gestützt ist, der an der hinteren Wand (4) des Kofferraums (1) schwenkend in einer vertikalen Ebene zwischen den zwei vorgenannten aktiven und inaktiven Positionen befestigt ist.

4. Vorrichtung gemäß Anspruch 1 bis 3, **dadurch gekennzeichnet, dass** es Verriegelungsmittel der Walze (3) in ihrer aktiven Arbeitsposition umfasst.

5. Vorrichtung gemäß Anspruch 4, **dadurch gekennzeichnet, dass** die Verriegelungsmittel wenigstens ein einen Mitnehmer (9) bildendes Element umfassen, das auf der hinteren Wand (4) des Kofferraums (1) angebracht ist und in eine Position schwenken oder gleiten kann, die zum entsprechenden Schwenkarm (5) der Stütze der Walze (3) querverläuft, derart, dass dieser Arm (5) in einer vertikalen Arbeitsposition der Walze (3) blockiert wird.

6. Vorrichtung gemäß Anspruch 4, **dadurch gekennzeichnet, dass** die Verriegelungsmittel wenigstens ein Element umfassen, das einen Riegel (12) bildet, der auf der hinteren Wand (4) des Kofferraums (1) aufgebaut ist und ein abgeschrägtes Ende (12a) umfasst, auf dem der entsprechende Schwenkarm (5) sich beim Anheben der Walze (3) in ihrer aktiven Arbeitsposition derart aufstützen kann, dass das einen Riegel (12) bildende Element gegen die Rückstellkraft einer Feder (14) quer zum mobilen Arm (5) zurückgezogen wird, der anschließend in der vertikalen Arbeitsposition der Walze (3) durch die Rückkehr des einen Riegel (12) bildenden Elements in der querverlaufenden Blockierungsposition dieses Arms blockiert wird.

7. Vorrichtung gemäß Anspruch 1, **dadurch gekennzeichnet, dass** die Walze (3) auf der hinteren Wand (4) des Kofferraums (1) mittels zweier Stücke in umgekehrter U-Form (17) aufgebaut ist, die auf jeder Seite der Walze (3) angebracht sind, deren Achse an jedem Ende des Verbindungsteils (17a) der zwei Schenkel (17b) des entsprechenden Teils in umgekehrter U-Form (17) befestigt ist, die zwei Schenkel können jeweils in zwei parallelen horizontalen Rillen (18) gleiten, die Führungsrillen derart bilden, dass durch Ausüben eines Zugs auf die Walze (3) nach oben, ausgehend von ihrer eingefahrenen Position, die Stücke in umgekehrter U-Form (17) durch Gleiten in den Rillen (18) von einer liegenden horizontalen Position in eine vertikale, zur Walze deutlich senkrechte Position der Walze (3) übergehen, und in der die zwei Stücke in umgekehrter U-Form (17), die aus ihren Rillen (18) freigesetzt sind, sich durch die freien Enden ihrer Schenkel (17b) auf den angesetzten horizontalen Teilen (20b) aufstützen, die zur Achse des Fahrzeugs parallel sind, um die Walze in aktiver Arbeitsposition zu halten.

8. Vorrichtung gemäß Anspruch 1 oder 2, **dadurch gekennzeichnet, daß** die Walze (3) an den zwei Enden ihrer Achse jeweils an zwei vertikalen Befestigungen (21) befestigt ist, die vertikal zwischen der eingefahrenen Position der Walze (3) und ihrer hohen Arbeitsposition vertikal gleiten kann, in der sie durch zwei Schalttasten (23) festgehalten wird, die jede elastisch und querverlaufend zur Achse des Fahrzeugs in einer Bohrung (21a) der entsprechenden Stützbefestigung (21) elastisch und vertikal eingreifen und per Hand in der hinteren Wand des Kofferraums eingedrückt werden können, um das Absenken der Walze (3) in ihre eingefahrene Position zu ermöglichen.

9. Vorrichtung gemäß einem der vorgenannten Ansprüche, **dadurch gekennzeichnet, dass** das rollende Element (3) sich im Innern des Kofferraums (1) des Kraftfahrzugs befindet.

10. Vorrichtung gemäß Anspruch 1 bis 9, **dadurch gekennzeichnet, dass** die Walze (3) in eingezogener Position in einer Form untergebracht ist, die in der hinteren Wand (4) des Kofferraums (1) realisiert ist, bevorzugt in einem inneren Abdeckstück, das diese Wand abdeckt.

11. Vorrichtung gemäß einem der vorgenannten Ansprüche, **dadurch gekennzeichnet, dass** das rollende Element (3) mit einem rutschfesten Material überzogen ist.

12. Hilfsvorrichtung zum Beladen eines Kofferraums (1) eines Kraftfahrzeugs, umfassend wenigstens ein rollendes Element (3), das durch eine Walze gebildet wird, die in der Nähe des oberen Randes (4a) der Wand (4) angeordnet ist, die den hinteren Teil des Kofferraums (1) begrenzt und es ermöglicht, auf diesem Gegenstände (2) im Kofferraum (1) gleiten zu lassen, **dadurch gekennzeichnet, dass** die Walze die Form eines Zylinders mit konischem Ende, einer Tonne oder einer doppelkegeligen Rolle aufweist und dauerhaft in einer Aufnahme (26) befestigt ist, die in einem inneren Abdeckstück des Kofferraums (1) realisiert ist, das die hintere Wand (4) desselben abdeckt, wobei die Aufnahme die Form eines hohlen Halbzylinders aufweist, dessen vertikale halbrunde Aussenwände durch die Achse der Walze (3) durchquert werden, um diese horizontal zu stützen.

13. Vorrichtung gemäß Anspruch 12, **dadurch gekennzeichnet, dass** die vorgenannte hohle halbzylindrische Aufnahme eine deutlich horizontale Wand hat, die an ihrem Rand abgerundet ist, um das Austreten von Wasser zu ermöglichen.

14. Vorrichtung gemäß Anspruch 12 oder 13, **dadurch gekennzeichnet**, das sie mehrere Walzen (3) umfasst, die in Serie zueinander durch die Zwischenstücke (30) befestigt sind, wobei jede eine Scheibenform aufweist, die an jeder Seite der Scheibe zwei koaxiale Stifte (31) umfassen, die als Stützachsen der zwei anliegenden Walzen (3) dienen, und Arme (33), die jeweils mit den Zwischenstücken fest verbunden sind, die es erlauben, dieselben an der hinteren Wand (4) des Kofferraums (1) zu befestigen.

15. Vorrichtung gemäß Anspruch 1 bis 14, **dadurch gekennzeichnet, dass** sie zwei Walzen (3) umfasst, die auf jeder Seite des Riegels oder des Verriegelungshakens der hinteren Öffnung des Kofferraums (1) angebracht sind.

## Claims

1. Device to help loading a luggage boot (1) of a motor vehicle, comprising at least one rolling element (3 ;35) made of a roller arranged near the upper edge (4a) of the wall (4) delimiting the rear portion of the luggage boot (1) and enabling to slide thereupon objects (2) into the luggage boot (1), **characterized in that** the rolling element (3) is mounted in order to occupy an inactive position retracted in the wall (4) or an active position of use.

2. Device according to claim 1, **characterized in that** the roller (3) is substantially horizontal and mounted onto the rear wall (4) of the luggage boot (1) substantially transversal to axis of the vehicle.

3. Device according to claim 1 or 2, **characterized in that** the roller (3) is supported at each of its ends by means of an arm (5) which is fixed to the rear wall (4) of the luggage boot (1) so to pivot in a vertical plane between the two prementioned active and inactive positions.

4. Device according to one of claims 1 to 3, **characterized in that** it comprises means for locking the roller (3) in its active position of use.

5. Device according to claim 4, **characterized in that** the locking means comprise at least one catch forming element (9) mounted onto the rear wall (4) of the luggage boot (1) and able to rock or slide into a position transverse to the corresponding pivoting arm (5) which supports the roller (3) so as to lock this arm (5) in a vertical position of use of the roller (3).

6. Device according to claim 4, **characterized in that** the locking means comprise at least one bolt forming element (12) mounted onto the rear wall (4) of the luggage boot (1) and comprising a bevelled end (12a) on which can bear the corresponding pivoting arm (5) upon raising the roller (3) to its active position of use in order to retract the bolt forming element (12) against the restoring force of a spring (14) transversally to the mobile arm (5) which is then locked in vertical position of use of the roller (3) by returning the bolt forming element (12) in transverse position for locking this arm.

7. Device according to claim 1, **characterized in that** the roller (3) is mounted onto the rear wall (4) of the luggage boot (1) by means of two inverted U-shaped pieces (17) arranged on both sides of the roller (3) the axis of which is fixed at each end of the connecting part (17a) of two branches (17b) of the corresponding U-shaped piece (17), said branches being able to slide respectively in two guiding rail forming horizontal parallel grooves (18) so that, by exerting an upwardly traction on the roller (3) from its retracted position, the inverted U-shaped pieces (17) pass by sliding in the grooves (18) from a lying horizontal position to a vertical position which is substantially perpendicular to the roller (3) and at which the two inverted U-shaped pieces (17), retracted from their grooves (18), come to bear, by the free ends of their branches (17b), on horizontal shouldered parts (20b) that are parallel to the vehicle axis for maintaining the roller in active position of use.

8. Device according to claim 1 or 2, **characterized in that** the roller (3) is fixed at the two ends of its axis respectively to two vertical tabs (21) able to vertically slide between the retracted position of the roller (3) and its raised position of use at which it is maintained by two spring buttons (23) each elastically engaging transverse to the axis of the vehicle into a perforation (21a) of the corresponding supporting tab (21) and able to be manually pressed into the rear wall of the luggage boot for enabling the descent of the roller (3) into its retracted position.

9. Device according to one of the preceding claims, **characterized in that** the rolling element (3) is located inside the luggage boot (1) of the vehicle.

10. Device according to one of claims 1 to 9, **characterized in that** the roller (3) is housed in its retracted position in a form made in the rear wall (4) of the luggage boot (1), preferably in an inner coating piece which covers this wall.

11. Device according to one of the preceding claims, **characterized in that** the rolling element (3) is covered with an antiskid material.

12. Device to help loading a luggage boot (1) of a motor vehicle, comprising at least one rolling element (3) made of a roller arranged near the upper edge (4a) of the wall (4) delimiting the rear portion of the luggage boot (1) and enabling to slide objects (2) thereupon into the luggage boot (1), **characterized in that** the roller has the shape of a cylinder with conical ends, a barrel or a diabolo, and is permanently fixed in a housing (26) made in an inner coating piece of the luggage boot (1) which covers the rear wall (4) thereof, the housing having the shape of two hollow half cylinders, the semicircular and vertical walls of which are crossed through by the axis of the roller (3) for the horizontal support thereof.

13. Device according to claim 12, **characterized in that** the prementioned hollow semi-cylindrical housing has one of its substantially horizontal walls which is rounded at its edge for permitting evacuation of water.

14. Device according to claim 12 or 13,
**characterized in that** it comprises a plurality of rollers (3) serially fixed the one to the other by means of intermediary pieces (30) each one in the shape of a disk comprising on both sides of the disk two coaxial pins (31) used as supporting axis for two adjacent rollers (3) and arms (33) integral respectively with the intermediate pieces for enabling to fix the same to the rear wall (4) of the luggage boot (1).

15. Device according to one of claims 1 to 14, **characterized in that** it comprises two rollers (3) mounted on both sides of the locking bolt or keeper of the rear opening portion of the luggage boot (1).
